# FASCICULE DE BREVET EUROPEEN

(11) **EP 1 697 259 B1**
(45) Date de publication et mention de la délivrance du brevet: **27.10.2010**
(21) Numéro de dépôt: 04817581.4
(22) Date de dépôt: 22.12.2004
(51) Int. Cl.: C01F 7/00, C01B 13/36, C01B 33/193, C08K 3/22

(54) **HYDROTALCITE INTERCALEE SILICE ET UTILISATION COMME CHARGE DANS DES COMPOSITIONS DE POLYMERES**
MIT SILICIUMDIOXID INTERKALIERTER HYDROTALCIT UND VERWENDUNG DAVON ALS FÜLLSTOFF IN POLYMERZUSAMMENSETZUNGEN
SILICA-INTERCALATED HYDROTALCITE, AND USE THEREOF AS A CHARGE IN POLYMER COMPOSITIONS

(30) Priorité: 22.12.2003 FR 0315173
(43) Date de publication de la demande: 06.09.2006
(73) Titulaire: RHODIA CHIMIE, 92512 Boulogne Billancourt Cedex (FR)
(72) Inventeur: FOULON, Michel, F-77360 VAIRES sur MARNE (FR); STELANDRE, Laurence, 59700 Marcq en Baroeul (FR)
(74) Mandataire: Delenne, Marc
(86) Numéro de dépôt international: PCT/FR2004/003354
(87) Numéro de publication internationale: WO 2005/063627

(56) Documents cités:
- EP-A- 0 976 681
- EP-A- 1 069 074
- US-A- 4 637 992
- US-A- 4 717 513
- US-B1- 6 306 494

## Description

La présente invention est relative à de l'hydrotalcite de magnésium et d'aluminium intercalée à l'aide de silice et à son utilisation comme charge dans des compositions de polymères Elle est également relative aux compositions de polymères ainsi obtenues. Enfin, elle concerne en outre les articles finis à base de ces compositions.

II est connu d'employer des charges blanches renforçantes dans les polymères, en particulier les élastomères, comme par exemple de la silice précipitée. Mais les résultats ne sont pas toujours ceux espérés.

L'hydrotalcite carbonatée ne peut.être efficacement utilisée comme charge pour polymères car elle conduit à des performances insuffisantes en renfort.

L'utilisation d'hydrotalcite calcinée et décarbonatée dans les compositions de polymères peut permettre d'atteindre un compromis satisfaisant de performances; cependant, sa dispersibitité dans la matrice polymère n'est pas satisfaisante, notamment pour des applications nécessitant un usage dans des conditions de sollicitation sévéres.

US-A-4 637 992 décrit des argiles à base de Al et Si, contenant des oxydes inorganiques entre ses feuillets de structure.

EP-A-1 069 074 décrit une composition constituée d'hydrotalcite et de silice colloïdale, présente comme phase séparée (liant).

Le but de l'invention est des proposer une nouvelle charge pour les compositions de polymères, leur procurant un compromis de propriétés mécaniques très satisfaisant, à savoir de préférence de bonnes propriétés rhéologiques, une très bonne aptitude à la vulcanisation, des propriétés dynamiques particulièrement intéressantes, un bon renforcement en terme de module, tout en présentant une très bonne dispersion dans ces compositions de polymères.

Dans ce but, la présente invention fournit une nouvelle hydrotalcite, utilisable notamment comme charge, en particulier comme charge renforçante, dans une composition de poiymère(s).

La présente invention a ainsi pour objet une hydrotalcite de magnésium et d'aluminium intercalée par de la silice, notamment de la silice précipitée. L'hydrotalcite selon l'invention peut contenir au moins un cation divalent choisi parmi Ni, Zn, Co, et au moins un cation trivalent choisi parmi Ga, Fe, Cr.

Le rapport molaire Mg/Al est généralement compris entre 1,5 et 5, de préférence entre 2 et 4, notamment entre 2 et 3.

L'hydrotalcite de magnésium et d'aluminium selon l'invention peut être préparée par le procédé décrit ci-après, ce procédé constituant un autre objet de l'invention.

De préférence, l'hydrotalcite selon l'invention est obtenue en ajoutant, de manière simultanée, à un pied de cuve formé d'eau, une solution contenant des sels (notamment acides) de Mg et d'Al (ou deux solutions contenant chacune un sel (notamment acide) d'un des deux cations), une solution de silicate, et une solution d'agent basique (celle-ci servant en particulier à réguler le pH, notamment à une valeur comprise entre 8 et 11, par exemple à environ 9).

On emploie préférentiellement une solution contenant à la fois des sels, en général des chlorures, de Mg et d'Al.

La solution de silicate utilisée eut être une solution de silicate de métal alcalin, notamment une solution de silicate de potassium ou, de préférence, une solution de silicate de sodium. Dans ce dernier cas, le silicate de sodium présente, en général, un rapport pondéral SiO₂/Na₂O compris entre 2,5 et 4,5, en particulier entre 3,0 et 4,0, par exemple entre 3,3 et 3,8.

La solution d'agent basique employée peut être une solution d'ammoniaque ou, de préférence, une solution d'hydroxyde de sodium (ou soude).

La durée de l'addition simultanée peut varier entre 30 et 90 minutes, par exemple entre 45 et 60 minutes ; la température du milieu réactionnel peut être maintenue entre 20 et 95°C ; en particulier, la température lors de l'addition simultanée peut être maintenue entre 20 et 40 °C, notamment entre 25 et 35 °C, par exemple à 30 °C environ.

A l'issue de cette addition simultanée, le produit (précipité) obtenu peut ensuite être chauffé, notamment afin d'être cristallisé ; la température du milieu réactionnel peut ainsi être amenée et maintenue entre 80 et 95 °C, notamment entre 85 et 95 °C, par exemple à environ 90 °C, en particulier pendant 1 à 3 heures, par exemple pendant 2 heures.

L'hydrotalcite de magnésium et d'aluminium obtenue peut ensuite être lavée, en particulier à l'eau, notamment pour éliminer les sels de métal alcalin qui se seraient formés.

Les objets élémentaires de l'hydrotalcite selon l'invention se présentent habituellement sous forme de plaquettes, en général sensiblement hexagonales. La plus grande dimension de ces plaquettes peut être comprise entre 15 et 80 nm, notamment entre 20 et 70 nm, en particulier entre 30 et 50 nm ; leur épaisseur peut être comprise entre 1 et 10 nm, notamment entre 2 et 8 nm, en particulier entre 3 et 7 nm.

Entre les feuillets de l'hydrotalcite de magnésium et d'alumium selon l'invention est intercalée de la silice. Selon une variante de l'invention, l'hydrotalcite peut contenir de la silice essentiellement, en particulier uniquement (absence de silice hors grain), intercalée entre ses feuillets : c'est notamment le cas lorsque la quantité de silicate employée lors de la préparation n'est pas en excès, en particulier de manière à obtenir dans l'hydrotalcite un rapport molaire Si / cation trivalent, en général Si/Al, de 1.

Selon une autre variante de l'invention, l'hydrotalcite peut contenir, en plus de la silice intercalée entre ses feuillets, de la silice à sa surface (présence de silice hors grain) : c'est notamment le cas lorsque la quantité de silicate employée lors de la préparation est en excès, en particulier de manière à obtenir dans l'hydrotalcite un rapport molaire Si / cation trivalent, en général Si/Al, supérieur à 1, par exemple supérieur à 2 ; de la silice précipite alors à côté de l'hydrotalcite intercalée silice. Cette silice hors grain peut contribuer aussi au renfort des polymères lors de l'utilisation de l'hydrotalcite selon l'invention comme charge dans ces derniers.

L'hydrotalcite selon l'invention possède de préférence une surface spécifique BET comprise entre 100 et 300 m²/g, en général entre 120 et 220 m²/g, en particulier entre 130 et 200 m²/g ; elle est par exemple comprise entre 150 et 180 m²/g. La surface BET est déterminée selon la méthode de BRUNAUER - EMMET - TELLER décrite dans "The Journal of the American Society", Vol. 60, page 309, février 1938 et correspondant à la norme NF T 45007 (novembre 1987).

Elle possède généralement une surface spécifique CTAB comprise entre 100 et 300 m²/g, en particulier entre 120 et 210 m²/g, notamment entre 130 et 190 m²/g ; elle peut être comprise entre 150 et 180 m²/g. La surface CTAB est la surface externe déterminée selon la norme NF T 45007 (novembre 1987 - 5.12).

L'hydrotalcite de magnésium et d'aluminium selon l'invention ou préparée selon le procédé de l'invention trouve une application particulièrement intéressante comme charge, notamment comme charge renforçante, de polymères, naturels ou synthétiques.

Les compositions de polymère(s) dans lesquelles est utilisée, à titre de charge, notamment de charge renforçante, au moins une hydrotalcite selon l'invention ou préparée selon le procédé de l'invention, et qui constituent un autre objet de l'invention, sont en général à base d'un ou plusieurs polymères ou copolymères, en particulier d'un ou plusieurs élastomères, notamment les élastomères thermoplastiques, présentant, de préférence, au moins une température de transition vitreuse comprise entre -150 et +300 °C, par exemple entre -150 et +20 °C.

A titre de polymères possibles, on peut citer les polymères diéniques, en particulier les élastomères diéniques.

Par exemple, on peut citer, les polymères ou copolymères dérivant de monomères aliphatiques ou aromatiques, comprenant au moins une insaturation (tels que, notamment, méthylène, le propylène, le butadiène, l'isoprène, le styrène), le polyacrylate de butyle, ou leurs mélanges ; on peut également citer les élastomères silicones, les élastomères fonctionnalisés (par exemple par des fonctions suceptibles de réagir avec la surface de l'hydrotalcite) et les polymères halogénés. On peut mentionner les polyamides.

Le polymère (copolymère) peut être un polymère (copolymère) en masse, un latex de polymère (copolymères) ou bien une solution de polymère (copolymère) dans l'eau ou dans tout autre liquide dispersant approprié.

A titre d'élastomères diéniques, on peut mentionner par exemple les polybutadiènes (BR), les polyisoprènes (IR), les copolymères de butadiène, les copolymères d'isoprène, ou leurs mélanges, et en particulier les copolymères de styrène-butadiène (SBR, notamment ESBR (émulsion) ou SSBR (solution)), les copolymères d'isoprène-butadiène (BIR), les copolymères d'isoprène-styrène (SIR), les copolymères d'isoprène-butadiène-styrène (SBIR), les terpolymères éthylène-propylène-diène (EPDM).

On peut également citer le caoutchouc naturel (NR).

Les compositions de polymère(s) peuvent être vulcanisées au soufre (on obtient alors des vulcanisats) ou réticulées notamment aux péroxydes.

Un autre composé tel que de la silice précipitée, notamment très dispersible, peut éventuellement être employé également à titre de charge ; si la quantité en poids de silice précipitée employée peut alors être minoritaire par rapport à celle de l'hydrotalcite, elle peut également être égale à ou majoritaire par rapport à celle mise en ouvre pour l'hydrotalcite ; l'hydrotalcite et la silice peuvent alors être introduites dans le(s) polymère(s) sous forme d'un mélange ou séparément. Cependant, le plus souvent, la charge utilisée est formée en totalité d'hydrotalcite selon l'invention ou préparée selon le procédé de l'invention.

En général, les compositions de polymère(s) comprennent en outre au moins un agent de couplage (hydrotalcite/polymère) et/ou au moins un agent de recouvrement ; elles peuvent également comprendre, entre autres, un agent anti-oxydant.

On peut notamment utiliser comme agents de couplage, à titre d'exemples non limitatifs, des silanes polysulfurés, dits "symétriques" ou "asymétriques" ; on peut citer plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-(triméthoxysilyl)propyl) ou les polysulfures de bis(3-(triéthoxysilyl)propyl). On peut également citer le tétrasulfure de monoéthoxydiméthylsilylpropyle.

L'agent de couplage peut être préalablement greffé sur le polymère.

Il peut être également employé à l'état libre (c'est-à-dire non préalablement greffé) ou greffé à la surface de l'hydrotalcite. Il en est de même de l'éventuel agent de recouvrement.

L'invention peut permettre notamment de diminuer la quantité d'agent de couplage à employer dans les compositions de polymère(s), tout en ne pénalisant pas leurs propriétés à l'état vulcanisé.

A l'agent de couplage peut éventuellement être associé un "activateur de couplage" approprié, c'est-à-dire un composé qui, mélangé avec cet agent de couplage, augmente l'efficacité de ce dernier.

La proportion en poids d'hydrotalcite selon l'invention ou préparée selon le procédé de l'invention dans la composition de polymère(s) peut varier dans une gamme assez large. Elle représente habituellement 4 à 80 %, notamment 20 à 80 %, par exemple 30 à 70 %, de la quantité du (des) polymère(s).

L'hydrotalcite selon l'invention ou préparée selon le procédé de l'invention procure à la composition de polymère(s) dans laquelle elle est mise en oeuvre un compromis de propriétés mécaniques très satisfaisant, à savoir de préférence de bonnes propriétés rhéologiques, une très bonne aptitude à la vulcanisation, des propriétés dynamiques particulièrement intéressantes, un bon renforcement en terme de module, tout en présentant une très bonne dispersion dans cette composition de polymère(s).

Ainsi, tout en présentant avantageusement, dans la composition de polymère(s), une dispersion similaire à celle de silices précipitées très dispersibles, l'hydrotalcite selon l'invention ou préparée selon le procédé de l'invention procure à cette composition de préférence :
- de bonnes propriétés rhéologiques et une excellente aptitude à la vulcanisation, au moins comparables à celles de silices précipitées très dispersibles,
- des propriétés dynamiques particulièrement intéressantes, notamment un effet Payne d'amplitude relativement faible, d'où une résistance au roulement plutôt faible pour les pneumatiques à base de cette composition, et/ou un maximum de tangente δ plutôt faible, d'où une faible dissipation de l'énergie mécanique,
- un bon renforcement en terme de module.

Elle conduit généralement aussi à l'obtention d'une composition de polymère(s) possédant une résistance élevée au vieillissement thermique et au vieillissement UV (rayonnements ultraviolets).

Il est à noter que la silice intercalée entre les feuillets de l'hydrotalcite ne présente ni l'inconvénient de constituer une interface charge/polymère(s) pouvant gêner l'emploi d'un agent de couplage notamment dans des conditions sévères de contrainte, ni l'inconvénient de se transformer en poison.

La présente invention est également relative aux articles finis à base des compositions de polymère(s) décrites précédemment (notamment à base des vulcanisats mentionnés ci-dessus).

On peut ainsi mentionner les enveloppes de pneumatique, en particulier les flancs et la bande de roulement pneumatique. L'hydrotalcite est utilisable dans la gomme interne de pneumatique ; elle peut notamment en améliorer l'imperméabilité (notamment à l'air), ce qui peut permettre d'éviter d'utiliser un élastomère halogénobutyl (chlorobutyl, bromobutyl par exemple) et/ou d'employer, de préférence majoritairement, plutôt du caoutchouc naturel.

On peut également citer, à titre d'articles finis, les revêtements de sols, les semelles de chaussures, les pièces de chenilles de véhicules, les galets de téléphériques, les joints d'appareils électroménagers, les joints de conduites de liquides ou de gaz, les joints de système de freinage, les gaines, les cables, les courroies de transmissions, les barrières aux gaz, les matériaux ignifugeants.

Les exemples suivants illustrent l'invention sans toutefois en limiter la portée.

### EXEMPLE 1 Hydrotalcite intercalée silice, sans silice hors grain (H1)

### 1) Préparation

Une solution contenant les cations Mg et Al est obtenue en dissolvant dans l'eau du MgCl₂, 6H₂O et du AlCl₃, 6H₂O. La concentration en Mg est de 0,5 mol/l et le rapport molaire Mg/Al est de 3.

Dans un pied de cuve contenant 500 ml d'eau, on introduit, de manière simultanée, en 54 minutes, 500 ml de la solution contenant les cations Mg et Al préparée ci-dessus, un volume V d'une solution de silicate de sodium de rapport pondéral SiO₂/Na₂O de 3,55, contenant 5,55 % de Na₂O et ayant une densité de 1,227 (mesurée à 20 °C), ce volume V correspondant à un rapport molaire Si/Al du produit final égal à 1, le pH du milieu réactionnel étant régulé à une valeur de 9 par ajout simultané d'une solution d'hydroxyde de sodium à 4 mol/kg. La température du milieu réactionnel est maintenue à 30 °C pendant toute cette addition simultanée, puis est portée et maintenue, pendant 2 heures, à 90 °C.

Le produit obtenu est ensuite lavé à l'eau, pour éliminer le chlorure de sodium.

### 2) Caractérisation

L'analyse chimique du produit final permet de déterminer sa composition ; il présente ainsi les rapports molaires suivants : Mg/Al = 2,8 et Si/Al = 1,0.

Son diagramme obtenu par DRX (Diffraction des Rayons X) correspond à celui d'une hydrotalcite, avec un premier pic (0,0,n) atténué et un pic d'intercalation aux petits angles à environ 4 nm.

Par MET (Microscopie Electronique à Transmission), on observe de fines plaquettes d'hydrotalcite d'environ 30 à 50 nm dans le plan et d'environ 5 nm dans l'épaisseur. On n'observe pas de silice hors grain.

La détermination du potentiel zeta en fonction du pH montre que la charge de surface en fonction du pH est positive comme pour une hydrotalcite standard sur la gamme de pH de 6,5 à 10. Or la charge de surface d'une silice étant négative, ceci confirme que la silice formée ne se trouve pas en surface de l'hydrotalcite, mais est intercalée entre les feuillets d'hydrotalcite.

### EXEMPLE 2 Hydrotalcite intercalée silice, avec silice hors grain (H2)

### 1) Préparation

On opère comme dans l'exemple 1, excepté que le volume V de solution de silicate de sodium introduit correspond à un rapport molaire Si/Al du produit final égal à 3.

### 2) Caractérisation

L'analyse chimique du produit final permet de déterminer sa composition ; il présente ainsi les rapports molaires suivants : Mg/Al = 2,8 et Si/Al = 3,0.

Son diagramme obtenu par DRX (Diffraction des Rayons X) correspond à celui d'une hydrotalcite, avec un premier pic (0,0,n) excessivement atténué et un pic d'intercalation aux petits angles à environ 4 nm.

Par MET (Microscopie Electronique à Transmission), on observe de fines plaquettes d'hydrotalcite. On observe de la silice non cristallisée en hors grain.

La détermination du potentiel zeta en fonction du pH montre que la charge de surface en fonction du pH est négative sur la gamme de pH de 4 à 10. Ceci confirme qu'une partie de la silice formée se trouve en surface de l'hydrotalcite, en plus de la silice intercalée entre les feuillets d'hydrotalcite.

### EXEMPLE 3

On prépare trois compositions de polymère :
- l'une contenant de la silice précipitée haute dispersibilité Z1165MP commercialisée par la société Rhodia, de surface spécifique BET de 150 m²/g et de densité de 2,1 g/cm³ (composition de référence R),
- l'une contenant de l'hydrotalcite H1 préparée dans l'exemple 1 (composition C1),
- l'une contenant de l'hydrotalcite H2 préparée dans l'exemple 2 (composition C2).

**Tableau 1**

| (compositions en parties, en poids) | | | |
|---|---|---|---|
| | Composition R | Composition C1 | Composition C2 |
| SBR ⁽¹⁾ | 100 | 100 | 100 |
| Z1165MP | 50 | 0 | 0 |
| Hydrotalcite H1 | 0 | 50 | 0 |
| Hydrotalcite H2 | 0 | 0 | 50 |
| Silane Si69 ⁽²⁾ | 4,0 | 4,0 | 4,0 |
| Diphénylguanidine | 1,45 | 1,45 | 1,45 |
| Acide stéarique | 1,1 | 1,1 | 1,1 |
| Oxyde de zinc | 1,82 | 1,82 | 1,82 |
| Anti-oxydant ⁽³⁾ | 1,45 | 1,45 | 1,45 |
| Sulfénamide ⁽⁴⁾ | 1,3 | 1,3 | 1,3 |
| Soufre | 1,1 | 1,1 | 1,1 |

| | | | |
|---|---|---|---|
| (1) Copolymère styrène butadiène synthétisé en solution (type Buna VSL 5525-0) commercialisé par la société Bayer (2) Agent de couplage charge/polymère (commercialisé par la société Dégussa) (3) N-(1,3-diméthyl-butyl)-N'-phényl-p-phénylènediamine (4) N-cyclohexyl-2-benzothiazyl sulfénamide | | | |

Les compositions sont préparées en travaillant thermo-mécaniquement les élastomères dans un malaxeur interne (type Brabender) d'un volume égal à 75 cm³, en une étape, avec une vitesse moyenne des palettes de 52 tours/minute, jusqu'à l'obtention d'une température de 110 °C, cette étape étant suivie d'une étape d'accélération réalisée dans un mélangeur interne (type Brabender) puis d'une étape de finition réalisée sur un malaxeur externe.

La vulcanisation des compositions est adaptée aux cinétiques de vulcanisation des mélanges correspondants.

Les propriétés des compositions sont exposées ci-après, les mesures ayant été effectuées (sur les compositions vulcanisées), selon les normes et/ou méthodes suivantes :

### Propriétés de vulcanisation

### Norme NF T 43015

On utilise, notamment pour la mesure du couple mini (Cmin) et du couple maxi (Cmax) un rhéomètre Monsanto 100 S.

Ts2 correspond au temps pendant lequel le contrôle du mélange est possible ; le mélange de polymère durcit à partir de Ts2 (début de la vulcanisation).

T90 correspond au temps au bout duquel 90 % de la vulcanisation ont été réalisés.

### Propriétés mécaniques

### Traction (modules) : norme NF T 46002

Les modules x % correspondent à la contrainte mesurée à x % de déformation en traction.

### Propriétés dynamiques

Les modules réels (G') et imaginaire (G") ainsi que la tangente de l'angle de perte (tan δ), définie comme le rapport de G" sur G', sont mesurés à différents taux de déformation sur un appareil de spectrométrie mécanique (Viscoanalyseur VA2000 de Metravib RDS).

Les conditions de l'essai (balayages en déformation, à température et fréquence fixées, pour déterminer notamment les propriétés de non linéarité des compositions (effet Payne)) sont les suivantes :
Les éprouvettes sont de forme parallélépipèdiques (longueur 6 mm, largeur 4 mm, épaisseur 2,5 mm environ). Une déformation sinusoïdale d'amplitude croissante est appliquée à une fréquence constante de 5 Hz. A chaque taux de déformation, G', G" et tan δ sont évalués. Ci-dessous, ΔG' fait référence à la différence entre le module G' mesuré à une déformation en cisaillement de 0,001 et le module G' mesuré à une déformation en cisaillement de 1, et tan δ max correspond au maximum de la tangente de l'angle de perte en fonction de la déformation.

**Tableau 2**

| | Composition R | Composition C1 | Composition C2 |
|---|---|---|---|
| Vulcanisation | | | |
| Cmin (In.lb) | 13,1 | 29,4 | 26,0 |
| Ts2 (min) | 7,3 | 3,0 | 3,4 |
| T90 (min) | 42,3 | 46,3 | 45,3 |
| Cmax (In.lb) | 74,5 | 77,8 | 70,0 |
| Mécanique | | | |
| Module 100 % (MPa) | 2,8 | 4,3 | 2,9 |
| Module 250 % (MPa) | 8,3 | 13,1 | 10,9 |
| Dynamique (effet Payne) | | | |
| ΔG' (MPa) | 8,2 | 4,4 | 1,9 |
| Tan δ max | 0,47 | 0,28 | 0,24 |

On constate que les compositions C1 et C2 selon l'invention présentent un compromis de propriétés intéressant par rapport à celui de la composition de référence R.

Avec une cinétique de vulcanisation comparable à celle de la composition de référence R, les compositions C1 et C2 conduisent à un renforcement en terme de modules plus marqué.

Cet effet de renfort est d'ailleurs perceptible dès les très faibles déformations.

De plus, les propriétés dynamiques des Compositions C1 et C2 sont plutôt avantageuses par rapport à celles de la composition de référence R : les compositions C1 et C2 ont en effet une plus faible amplitude de la chute du module (c'est-à-dire de la non linéarité), accompagnée d'un maximum de tangente δ en fonction de la déformation sensiblement plus bas (d'où une très faible dissipation de l'énergie mécanique).

Par MEB (Microscopie Electronique à Balayage) et MET (Microscopie Electronique à Transmission), on observe une très bonne dispersion des particules d'hydrotalcite H1 et H2 respectivement dans les compositions C1 et C2, comparable à celle de la silice dans la composition de référence R.

## Revendications

1. Hydrotalcite de magnésium et d'aluminium intercalée par de la silice.

2. Hydrotalcite selon la revendication 1, **caractérisée en ce qu'**elle contient au moins un cation divalent choisi parmi Ni, Zn, Co, et au moins un cation trivalent choisi parmi Ga, Fe, Cr.

3. Hydrotalcite selon l'une des revendications 1 et 2, **caractérisée en ce qu'**elle présente un rapport molaire Mg/Al compris entre 1,5 et 5, de préférence entre 2 et 4.

4. Hydrotalcite selon l'une des revendications 1 à 3, **caractérisée en ce qu'**elle contient de la silice essentiellement intercalée entre ses feuillets.

5. Hydrotalcite selon l'une des revendications 1 à 4, **caractérisée en ce qu'**elle contient de la silice uniquement intercalée entre ses feuillets.

6. Hydrotalcite selon la revendication 5, **caractérisée en ce qu'**elle présente un rapport molaire Si/Al égal à 1.

7. Hydrotalcite selon l'une des revendications 1 à 3, **caractérisée en ce qu'**elle contient, en plus de la silice intercalée entre ses feuillets, de la silice à sa surface.

8. Hydrotalcite selon la revendication 7, **caractérisée en ce qu'**elle présente un rapport molaire Si/Al supérieur à 1, en particulier supérieur à 2.

9. Procédé de préparation d'une hydrotalcite de magnésium et d'aluminium intercalée selon l'une des revendications 1 à 8, **caractérisé en ce qu'**il comprend une étape d'addition simultanée, à un pied de cuve formée d'eau :
- soit d'une solution contenant des sels de Mg et d'Al, soit de deux solutions, l'une contenant un sel de Mg, l'autre contenant un sel d'Al,
- d'une solution de silicate, de préférence une solution de silicate de métal alcalin,
- d'une solution d'agent basique.

10. Procédé selon la revendication 9, **caractérisé en ce que** la durée de l'addition simultanée est comprise entre 30 et 90 minutes.

11. Procédé selon l'une des revendications 9 et 10, **caractérisé en ce que** la température lors de l'addition simultanée est maintenue entre 20 et 40 °C.

12. Procédé selon l'une des revendications 9 à 11, **caractérisé en ce que**, à l'issue de l'addition simultanée, le produit obtenu est chauffé, de préférence entre 80 et 95 °C, en particulier pendant 1 à 3 heures.

13. Utilisation comme charge, en particulier comme charge renforçante, dans une composition de polymère(s); d'au moins une hydrotalcite de magnésium et d'aluminium selon l'une des revendications 1 à 8 ou préparée par le procédé selon l'une des revendications 9 à 12.

14. Utilisation selon la revendication 13, **caractérisée en ce que** ladite composition de polymère(s) est à base d'au moins un polymère ou copolymère présentant au moins une température de transition vitreuse comprise ente -150 et +300 °C.

15. Utilisation selon l'une des revendications 13 et 14, **caractérisée en ce que** ladite composition de polymère(s) est à base d'au moins un élastomère thermoplastique.

16. Utilisation selon l'une des revendications 13 à 15, **caractérisée en ce que** ladite composition de polymère(s) comprend en outre au moins un agent de couplage et/ou au moins un agent de recouvrement.

17. Composition de polymère(s) à base d'au moins un polymère ou copolymère, comprenant une charge, **caractérisée en ce que** ladite charge est formée par au moins une hydrotalcite de magnésium et d'aluminium selon l'une des revendications 1 à 8 ou une hydrotalcite préparée par le procédé selon l'une des revendications 9 à 12.

18. Composition de polymère(s) selon la revendication 17, **caractérisée en ce que** ledit polymère ou copolymère présente au moins une température de transition vitreuse comprise entre -150 et +300 °C.

19. Composition de polymère(s) selon l'une des revendications 17 et 18, **caractérisée en ce qu'**elle comprend en outre au moins un agent de couplage et/ou au moins un agent de recouvrement.

20. Article fini à base d'au moins une composition telle que définie dans l'une des revendications 17 à 19.

## Claims

1. A magnesium aluminium hydrotalcite intercalated by silica.

2. The hydrotalcite as claimed in claim 1, **characterized in that** it comprises at least one divalent cation chosen from Ni, Zn or Co, and at least one trivalent cation chosen from Ga, Fe or Cr.

3. The hydrotalcite as claimed in either of claims 1 and 2, **characterized in that** it exhibits an Mg/Al molar ratio of between 1.5 and 5, preferably between 2 and 4.

4. The hydrotalcite as claimed in one of claims 1 to 3, **characterized in that** it comprises silica essentially intercalated between its layers.

5. The hydrotalcite as claimed in one of claims 1 to 4, **characterized in that** it comprises silica solely intercalated between its layers.

6. The hydrotalcite as claimed in claim 5, **characterized in that** it exhibits an Si/Al molar ratio equal to 1.

7. The hydrotalcite as claimed in one of claims 1 to 3, **characterized in that** it comprises, in addition to the silica intercalated between its layers, silica at its surface.

8. The hydrotalcite as claimed in claim 7, **characterized in that** it exhibits an Si/Al molar ratio of greater than 1, in particular of greater than 2.

9. A process for the preparation of an intercalated magnesium aluminium hydrotalcite as claimed in one of claims 1 to 8, **characterized in that** it comprises a stage of simultaneous addition, to a vessel heel formed of water :
- either of a solution comprising salts of Mg and Al, or of two solutions, one comprising a salt of Mg, and the other comprising a salt of Al,
- of a silicate solution, preferably an alkali metal silicate solution,
- of a basic agent solution.

10. The process as claimed in claim 9, **characterized in that** the duration of the simultaneous addition is between 30 and 90 minutes.

11. The process as claimed in either of claims 9 and 10, **characterized in that** the temperature during the simultaneous addition is maintained between 20 and 40 °C.

12. The process as claimed in one of claims 9 to 11, **characterized in that**, on conclusion of the simultaneous addition, the product obtained is heated, preferably between 80 and 95 °C, in particular for 1 to 3 hours.

13. The use as filler, in particular as reinforcing filler, in a polymer composition, of at least one hydrotalcite as claimed in one of claims 1 to 8 or prepared by the process as claimed in one of claims 9 to 12.

14. The use as claimed in claim 13, **characterized in that** said polymer composition is based on at least one polymer or copolymer exhibiting at least one glass transition temperature of between -150 and +300 °C.

15. The use as claimed in either of claims 13 and 14, **characterized in that** said polymer composition is based on at least one thermoplastic elastomer.

16. The use as claimed in one of claims 13 to 15, **characterized in that** said polymer composition additionally comprises at least one coupling agent and/or at least one coating agent.

17. A polymer composition based on at least one polymer or copolymer comprising a filler, **characterized in that** said filler is formed by at least one hydrotalcite as claimed in one of claims 1 to 8 or one hydrotalcite prepared by the process as claimed in one of claims 9 to 12.

18. The polymer composition as claimed in claim 17, **characterized in that** said polymer or copolymer exhibits at least one glass transition temperature of between -150 and +300 °C.

19. The polymer composition as claimed in either of claims 17 and 18, **characterized in that** it additionally comprises at least one coupling agent and/or at least one coating agent.

20. A finished article based on at least one composition as defined in one of claims 17 to 19.

## Patentansprüche

1. Magnesiumaluminiumhydrotalcit, der mit Siliciumdioxid interkaliert ist.

2. Hydrotalcit nach Anspruch 1, **dadurch gekennzeichnet, dass** er mindestens ein aus Ni, Zn, Co ausgewähltes zweiwertiges Kation und mindestens ein aus Ga, Fe, Cr ausgewähltes dreiwertiges Kation enthält.

3. Hydrotalcit nach einem der Ansprüche 1 und 2, **dadurch gekennzeichnet, dass** er ein Molverhältnis Mg/Al zwischen 1,5 und 5, vorzugsweise zwischen 2 und 4 einschließlich aufweist.

4. Hydrotalcit nach einem der Ansprüche 1 bis 3, **dadurch gekennzeichnet, dass** er Siliciumdioxid im Wesentlichen zwischen seinen Plättchen interkaliert enthält.

5. Hydrotalcit nach einem der Ansprüche 1 bis 4, **dadurch gekennzeichnet, dass** er Siliciumdioxid ausschließlich zwischen seinen Plättchen interkaliert enthält.

6. Hydrotalcit nach Anspruch 5, **dadurch gekennzeichnet, dass** er ein Molverhältnis Si/Al gleich 1 aufweist.

7. Hydrotalcit nach einem der Ansprüche 1 bis 3, **dadurch gekennzeichnet, dass** er zusätzlich zu dem zwischen seinen Plättchen interkalierten Siliciumdioxid Siliciumdioxid auf seiner Oberfläche enthält.

8. Hydrotalcit nach Anspruch 7, **dadurch gekennzeichnet, dass** er ein Molverhältnis Si/Al größer 1, insbesondere größer 2 aufweist.

9. Verfahren zur Herstellung eines interkalierten Magnesiumaluminiumhydrotalcits nach einem der Ansprüche 1 bis 8, **dadurch gekennzeichnet, dass** es einen Schritt der gleichzeitigen Zugabe zu einem aus Wasser gebildeten Ansatz:
- entweder einer Lösung, welche Salze von Mg und Al enthält, oder von zwei Lösungen, wobei die eine ein Mg-Salz enthält, die andere ein Al-Salz enthält,
- einer Silicat-Lösung, vorzugsweise eine Alkalimetallsilicat-Lösung;
- einer Lösung eines basischen Mittels
umfasst.

10. Verfahren nach Anspruch 9, **dadurch gekennzeichnet, dass** die Dauer der gleichzeitigen Zugabe zwischen 30 und 90 Minuten einschließlich liegt.

11. Verfahren nach einem der Ansprüche 9 und 10, **dadurch gekennzeichnet, dass** die Temperatur bei der gleichzeitigen Zugabe zwischen 20 und 40 ° C aufrechterhalten wird.

12. Verfahren nach einem der Ansprüche 9 bis 11, **dadurch gekennzeichnet, dass** am Ende der gleichzeitigen Zugabe das erhaltene Produkt erwärmt wird, vorzugsweise zwischen 80 und 95 °C insbesondere für ein 1 bis 3 Stunden.

13. Verwendung mindestens eines Magnesiumaluminiumhydrotalcits nach einem der Ansprüche 1 bis 8 oder hergestellt durch das Verfahren nach einem der Ansprüche 9 bis 12 als Füllstoff, insbesondere als verstärkender Füllstoff, in einer Zusammensetzung von Polymer(en).

14. Verwendung nach Anspruch 13, **dadurch gekennzeichnet, dass** die Zusammensetzung von Polymer(en) auf mindestens einem Polymer oder Copolymer basiert, das mindestens eine Glasübergangstemperatur zwischen -150 und +300 °C einschließlich aufweist.

15. Verwendung nach einem der Ansprüche 13 und 14, **dadurch gekennzeichnet, dass** die Zusammensetzung von Polymer(en) auf mindestens einem thermoplastischen Elastomer basiert.

16. Verwendung nach einem der Ansprüche 13 bis 15, **dadurch gekennzeichnet, dass** die Zusammensetzung von Polymer(en) darüber hinaus mindestens einen Haftvermittler und/oder mindestens ein Überzugsmittel umfasst.

17. Zusammensetzung von Polymer(en) auf der Basis mindestens eines Polymers oder Copolymers, das einen Füllstoff umfasst, **dadurch gekennzeichnet, dass** der Füllstoff aus mindestens einem Magnesiumaluminiumhydrotalcit nach einem der Ansprüche 1 bis 8 oder einem gemäß dem Verfahren nach einem der Ansprüche 9 bis 12 hergestellten Hydrotalcit gebildet ist.

18. Zusammensetzung von Polymer(en) nach Anspruch 17, **dadurch gekennzeichnet, dass** das Polymer oder Copolymer mindestens eine Glasübergangstemperatur zwischen -150 und +300 °C aufweist.

19. Zusammensetzung von Polymer(en) nach einem der Ansprüche 17 und 18, **dadurch gekennzeichnet, dass** sie darüber hinaus mindestens einen Haftvermittler und/oder mindestens ein Überzugsmittel umfasst.

20. Erzeugnis auf der Basis mindestens einer Zusammensetzung, wie in einem der Ansprüche 17 bis 19 definiert.
